# FASCICULE DE BREVET EUROPEEN

(11) **EP 1 775 498 B1**
(45) Date de publication et mention de la délivrance du brevet: **06.01.2010**
(21) Numéro de dépôt: 06122267.5
(22) Date de dépôt: 13.10.2006
(51) Int. Cl.: F16H 3/40, A01B 33/08

(54) **Boite de vitesses pour équipement de motoculture**
Getriebe für motorisiertes landwirtschaftliches Arbeitsgerät
Transmission for a motorized agricultural working vehicle

(30) Priorité: 14.10.2005 FR 0510527
(43) Date de publication de la demande: 18.04.2007
(73) Titulaire: PUBERT HENRI SAS, 85110 Chantonnay (FR)
(72) Inventeur: Pubert, Jean-Pierre, 85110, Chantonnay (FR)
(74) Mandataire: Bioret, Ludovic

(56) Documents cités:
- EP-A- 0 826 580
- EP-A- 1 441 152
- US-A- 6 070 482
- PATENT ABSTRACTS OF JAPAN vol. 2003, no. 12, 5 décembre 2003 (2003-12-05) -& JP 2003 262255 A (MITSUBA CORP), 19 septembre 2003 (2003-09-19)

## Description

### 1. Domaine de l'invention

Le domaine de l'invention est celui de la motoculture. Plus précisément, l'invention concerne les équipements de motoculture tels que les motoculteurs, les motobineuses, ou tout autre équipement, notamment ceux à conducteur marchant, équipé d'outils de travail du sol et/ou de roues.

### 2. Solutions de l'art antérieur

Le document EP-A-0 826 580 décrit une boîte de vitesses pour équipement de motoculture conformément au préambule de la revendication 1.

Les équipements de motoculture comportent notamment un moteur, des outils et/ou des roues, et un mécanisme de transmission entre le moteur et les outils et/ou les roues. Dans le cas des machines les plus perfectionnées ou les plus puissantes, cette transmission permet un changement de vitesses, qui permet aux outils et/ou aux roues de changer d'allure et/ou de faire marche arrière.

Ces changements d'allure sont utiles, par exemple, pour adapter la vitesse d'un motoculteur à la nature du sol à travailler. La marche arrière, elle, permet notamment de manoeuvrer plus facilement des équipements de motoculture lourds, sans efforts excessifs pour l'utilisateur.

Ce changement de vitesses nécessite une boîte de vitesses mettant en oeuvre un grand nombre de pièces mécaniques complexes. Cette boîte de vitesses coûte cher, pèse lourd et prend beaucoup de place. Pour cette raison, de tels changements de vitesses sont généralement réservés aux équipements les plus gros, alors que les équipements plus petits n'ont aucun changement de vitesses et ne comprennent que des cinématiques simples.

De plus, il nécessite le plus souvent un mécanisme de débrayage. L'utilisation de ce changement de vitesses n'est donc pas très facile pour l'utilisateur, surtout dans le cas des équipements à conducteur marchant, ou les deux mains de l'utilisateur doivent rester sur les deux poignées.

### 3. Objectifs de l'invention

L'invention a notamment pour objectif de pallier ces inconvénients de l'art antérieur.

Plus précisément, un objectif de l'invention est de fournir une boîte de vitesses pour équipement de motoculture particulièrement simple et facile d'utilisation.

Un autre objectif de l'invention est de fournir une telle boîte de vitesses comportant un nombre réduit d'éléments mécaniques et coûtant peu cher à fabriquer.

Encore un autre objectif de l'invention est de fournir une boîte de vitesses qui puisse être particulièrement compacte et qui permette un assemblage très facile des différents éléments constituants l'équipement de motoculture.

### 4. Exposé de l'invention

Ces objectifs, ainsi que d'autres qui apparaîtront par la suite, sont atteints à l'aide d'une boîte de vitesses pour équipement de motoculture, comprenant au moins une roue d'entrée liée à des moyens de motorisation et une roue de sortie, qui, selon l'invention, comprend au moins un pignon satellite en prise avec la roue de sortie, l'axe du pignon étant parallèle à l'axe de la roue de sortie et monté pivotant autour de celui-ci de façon à prendre au moins deux positions :
- une première position dans laquelle le pignon satellite est en prise avec une première des roues d' entrée ; et
- au moins une seconde position dans laquelle le pignon satellite n'est pas en prise avec une première des roues d'entrée.

On obtient ainsi une boîte de vitesse comprenant peu d'éléments mécaniques, et dans laquelle le mouvement de changement de rapport, ou de mise au point mort, est particulièrement simple.

Selon un mode de réalisation préférentiel de l'invention, au moins une des secondes position est une position dans laquelle le pignon satellite vient en prise avec une seconde roue d'entrée.

La boîte de vitesse peut ainsi permettre de choisir entre plusieurs rapports de vitesse.

Avantageusement, l'une des roues d'entrée correspond à une marche arrière.

Selon un mode de réalisation avantageux, la boîte de vitesse comprend un carter contenant les roues d'entrée, la roue de sortie et le pignon satellite.

La boîte de vitesse est ainsi fiable et compacte.

Préférentiellement, le carter assure une fonction de châssis du équipement de motoculture.

Ainsi, l'invention permet d'éviter d'ajouter un châssis en plus du carter de la boîte de vitesse. On obtient un gain de place et de poids de l'équipement, et une plus grande simplicité de montage.

Selon un mode de réalisation préférentiel de l'invention, au moins certains des éléments suivants sont solidarisés au carter : un moteur, un guidon, une béquille, des outils de travail du sol, des roues, des protections.

L'invention concerne également un équipement de motoculture comportant une boîte de vitesses comprenant au moins une roue d'entrée liée à des moyens de motorisation et une roue de sortie, qui comprend au moins un pignon satellite en prise avec la roue de sortie, l'axe du pignon étant parallèle à l'axe de la roue de sortie et monté pivotant autour de celui-ci de façon à prendre au moins deux positions :
- une première position dans laquelle le pignon satellite est en prise avec une première des roues d' entrée ; et
- au moins une seconde position dans laquelle le pignon satellite n'est pas en prise avec une première des roues d'entrée.

Avantageusement, cet équipement comprend un carter contenant les roues d'entrée, la roue de sortie et le pignon satellite.

Selon un mode de réalisation préférentiel de l'invention, au moins certains des éléments suivants sont solidarisés au carter : un moteur, un guidon, une béquille, des outils de travail du sol, des roues, des protections.

Préférentiellement, cet équipement appartient au groupe comprenant : les motoculteurs, les débroussailleuses à roues, les motobineuses, les microbineuses, les tondeuses et les faucheuses broyeuses.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente une boîte de vitesses selon un mode de réalisation de l'invention , dont le carter est ouvert ;
- la figure 2 représente le support de pignon satellite s'adaptant à la boîte de vitesses de la figure 1 ;
- la figure 3 représente la boîte de vitesses de la figure 1 dans laquelle est montée le support de pignon satellite de la figure 3 ;
- la figure 4 représente une partie d'un motoculteur comportant une boîte de vitesses selon un mode de réalisation de l'invention ;
- la figure 5 représente de façon schématique le mouvement des roues de la boîte de vitesses de la figure 3.

### 6. Description détaillée de l'invention

### 6.1 Rappel du principe de l'invention

Le principe général de l'invention repose sur l'utilisation d'un pignon satellite en prise avec la roue de sortie et pouvant basculer autour de celle-ci, de façon à être en prise soit avec une roue d'entrée, soit avec une autre.

### 6.2 Principe de la transmission

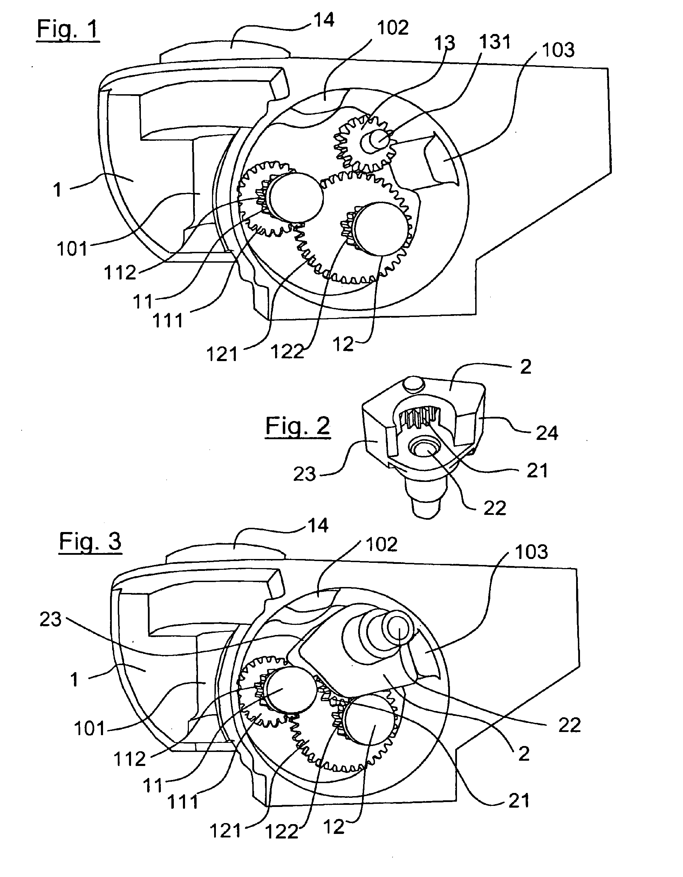

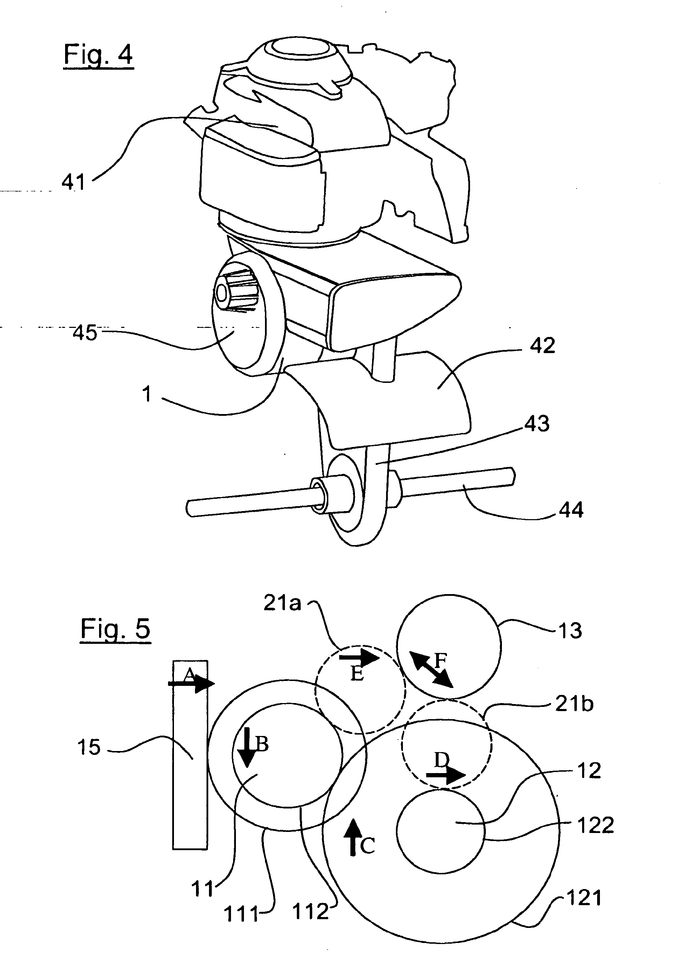

Les figures 1 et 3 représentent une boîte de vitesses selon un mode de réalisation de l'invention. Les mouvements des différentes roues de la boîte de vitesses sont représentés schématiquement sur la figure 5.

La boîte de vitesses est comprise dans un carter 1. Un mouvement rotatif est transmis par le moteur à la boîte de vitesses par l'intermédiaire d'un embrayage à cloche14 ou par courroie. Cet embrayage transmet le mouvement à une vis sans fin 15, qui se trouve sous une partie 101 du carter. Le mouvement de la vis sans fin 15 est représenté par la flèche A de la figure 5.

La vis sans fin transmet le mouvement à une roue d'entrée 11, qui comporte deux pignons montés sur le même axe. Un premier pignon 111 est en prise avec la vis sans fin 15, ce qui fait tourner la roue d'entrée 11 dans le sens indiqué par la flèche B de la figure 5. La roue d'entrée11 comporte également un second pignon 112.

Une seconde roue d'entrée, ou roue intermédiaire 12, comporte également deux pignons. Un premier pignon 121 est en prise avec le pignon 112 de la roue d'entrée 11, ce qui fait tourner la roue intermédiaire 12 dans le sens indiqué par la flèche C de la figure 5. La roue intermédiaire 12 comporte également un second pignon 122. Les deux pignons 112 et 122 tournent donc en sens inverse l'un de l'autre.

Dans la boîte de vitesses représentée sur la figure 1, on peut également voir la roue de sortie 13, qui n'est en prise avec aucune autre roue. En effet, sur la figure 1, la boîte de vitesses est représentée sans le support du pignon satellite.

La figure 2 représente le support 2 du pignon satellite destiné à s'adapter à la roue de sortie 13. Ce support comporte un trou 22 destiné à recevoir l'arbre de rotation 131 de la roue 13. Il maintient le pignon satellite 21, qui est destiné, quand le support 2 est en place, à être en prise avec la roue de sortie 13. Le support 2 du pignon satellite comporte également deux portions de butée 23 et 24.

La figure 3 montre le support 2 du pignon satellite en place dans la boîte de vitesses. Ce pignon satellite 21 peut tourner autour de la roue de sortie 13 entre deux positions. Dans une première position, représentée par la figure 3, la portion de butée 24 est en contact avec une butée 103 du carter, et le pignon satellite 21 est en prise avec le pignon 122 de la roue intermédiaire 12.

Le pignon satellite dans cette position est représenté sous la référence 21 b sur la figure 5. Le pignon satellite 21b tourne alors dans le sens anti-horaire, représenté par la flèche D, et fait tourner la roue de sortie 13 dans le sens horaire.

Dans une deuxième position, la portion de butée 23 est en contact avec la butée 102 du carter, et le pignon satellite 21 est en prise avec le pignon 112 de la roue d'entrée 11. Le pignon satellite dans cette position est représenté sous la référence 21 a sur la figure 5. Le pignon satellite 21 a tourne alors dans le sens horaire, représenté par la flèche E, et fait tourner la roue de sortie 13 dans le sens anti-horaire.

Le passage entre les deux positions est commandé par l'intermédiaire d'un câble qui est lié au support 2 du pignon satellite. Ce câble peut être actionné depuis une manette située au niveau des poignées de l'équipement de motoculture. Il est donc possible, de façon très facile de passer la transmission de la marche avant à la marche arrière, et vice-versa.

### 6.3 Le carter

La boîte de vitesses selon l'invention est de conception particulièrement simple, et est très compacte. Le carter 1 comprenant ses éléments et assurant la protection et l'étanchéité de la chaîne de protection mécanique peut donc être de taille réduite. Ce carter est avantageusement en matériau plastique, ce qui permet à la boîte de vitesses d'être peu chère et légère.

Selon un mode de réalisation de l'invention, le carter sert de châssis à l'équipement de motoculture, comme représenté par la figure 4. On peut voir sur cette figure le carter 1, qui est fermé par un couvercle 45, et sur lequel sont montés directement les différents éléments d'une motobineuse.

Parmi les éléments montés directement sur ce carter 1, on peut voir le moteur 41, une transmission par chaîne 43 vers l'axe des outils et/ou des roues 44, et un élément de protection 42. D'autres éléments, comme par exemple le guidon, ou la béquille, peuvent être assemblés directement sur le carter 1.

Le carter 1 assure donc une double fonction de protection de la boîte de vitesses et de châssis de l'équipement de motoculture. Cette double fonction permet une grande compacité de l'ensemble, qui permet un nouveau design des équipements de motoculture.

### 6.4 Autres caractéristiques et avantages

Le mode de réalisation décrit dans ce brevet comporte deux roues d'entrée 11 et 12, la deuxième roue d'entrée 12, ou roue intermédiaire, correspondant à une marche arrière. Bien entendu, il est également possible de ne mettre qu'une seule roue d'entrée, la deuxième position correspondant alors à une position de point mort. De la même façon, il est possible de mettre plus de deux roues d'entrée, plus éventuellement une position de point mort, par exemple pour permettre différents rapports de vitesses.

De plus, le système est réversible, et il est évidemment possible d'inverser l'entrée et la sortie de cette boîte de vitesses, en reliant la roue appelée « roue de sortie » au moteur, et la ou les roue(s) appelée(s) « roue d'entrée » aux roues et/ou aux outils.

Une telle boîte de vitesses peut être installée sur des équipements de motocultures tels que, par exemple, les motoculteurs, les motobineuses, les microbineuses, les débroussailleuses, les tondeuses, ou les faucheuses-broyeuses.

## Revendications

1. Boîte de vitesses pour équipement de motoculture, comprenant au moins une roue d'entrée (11,12) liée à des moyens de motorisation et une roue de sortie (13),
**caractérisée en ce qu'**elle comprend au moins un pignon satellite (21) en prise avec ladite roue de sortie (13) l'axe dudit pignon (21) étant parallèle à l'axe de ladite roue de sortie (13) et monté pivotant autour de celui-ci de façon à prendre au moins deux positions :
- une première position dans laquelle ledit pignon satellite est en prise avec une première desdites roues d'entrée (11); et
- au moins une seconde position dans laquelle ledit pignon satellite (21) n'est pas en prise avec ladite première roue d'entrée (11)

2. Boîte de vitesses selon la revendication 1 **caractérisée en ce que** au moins une desdites secondes position est une position dans laquelle ledit pignon satellite vient en prise avec une seconde roue d'entrée (12).

3. Boîte de vitesses selon l'une quelconque des revendications 1 et 2, **caractérisée en ce que** l'une desdites roues d'entrée (11,12) correspond à une marche arrière.

4. Boîte de vitesses selon l'une quelconque des revendications 1 à 3, **caractérisée en ce qu'**elle comprend un carter (1) contenant lesdites roues d'entrée (11,12), ladite roue de sortie (13) et ledit pignon satellite (21).

5. Boîte de vitesses selon la revendication 4 **caractérisée en ce que** ledit carter (1) assure une fonction de châssis dudit équipement de motoculture.

6. Boîte de vitesses selon l'une quelconque des revendications 4 et 5, **caractérisée en ce que** au moins certains des éléments suivants sont solidarisés audit carter (1) :
- un moteur ;
- un guidon;
- une béquille ;
- des outils de travail du sol ;
- des roues ;
- des protections.

7. Equipement de motoculture comportant une boîte de vitesses telle que décrite dans l'une des revendications 1 à 6.

8. Equipement de motoculture selon la revendication 7, **caractérisé en ce qu'**il comprend un carter (1) contenant lesdites roues d'entrée (11,12) ladite roue de sortie (13) et ledit pignon satellite (21).

9. Equipement de motoculture selon la revendication 8, **caractérisé en ce que** au moins certains des éléments suivants sont solidarisés audit carter :
- un moteur ;
- un guidon ;
- une béquille ;
- des outils de travail du sol ;
- des roues ;
- des protections.

10. Equipement de motoculture selon l'une quelconque des revendications 7 à 9, **caractérisé en ce qu'**il appartient au groupe comprenant :
- les motoculteurs ;
- les débroussailleuses à roues ;
- les motobineuses ;
- les microbineuses ;
- les tondeuses;
- les faucheuses broyeuses.

## Claims

1. Transmission for motorised agricultural equipment, comprising at least one input gear (11, 12) connected to motorisation means and an output gear (13), **characterised in that** it comprises at least one planet gear (21) in engagement with said output gear (13), the axis of said gear (21) being parallel with the axis of said output gear (13) and pivotably mounted about said axis so as to adopt at least two positions:
- a first position in which said planet gear is in engagement with a first of said input gears (11); and
- at least one second position in which said planet gear (21) is not in engagement with said first input gear (11).

2. Transmission according to Claim 1, **characterised in that** at least one of said second positions is a position in which said planet gear comes into engagement with a second input gear (12).

3. Transmission according to any one of Claims 1 and 2, **characterised in that** one of said input gears (11, 12) corresponds to a reverse gear.

4. Transmission according to any one of Claims 1 to 3, **characterised in that** it comprises a housing (1) containing said input gears (11, 12), said output gear (13) and said planet gear (21).

5. Transmission according to Claim 4, **characterised in that** said housing (1) provides the function of a chassis of said motorised agricultural equipment.

6. Transmission according to any one of Claims 4 and 5, **characterised in that** at least some of the following elements are fixed to said housing (1):
- a motor;
- a handle;
- a stand;
- implements for working the soil;
- wheels;
- safety devices.

7. Motorised agricultural equipment comprising a transmission as disclosed in any one of Claims 1 to 6.

8. Motorised agricultural equipment according to Claim 7, **characterised in that** it comprises a housing (1) containing said input gears (11, 12), said output gear (13) and said planet gear (21).

9. Motorised agricultural equipment according to Claim 8, **characterised in that** at least some of the following elements are fixed to said housing:
- a motor;
- a handle;
- a stand;
- implements for working the soil;
- wheels;
- safety devices.

10. Motorised agricultural equipment according to any one of Claims 7 to 9, **characterised in that** it belongs to the group comprising:
- rotavators;
- wheeled brushcutters;
- motorised cultivators;
- mini cultivators;
- mowers
- flail mowers.

## Patentansprüche

1. Getriebe für motorisiertes landwirtschaftliches Arbeitsgerät, das mindestens ein mit Motorisierungsmitteln verbundenes Eingangsrad (11, 12) und ein Ausgangsrad (13) aufweist,
**dadurch gekennzeichnet, dass** es mindestens ein Planetenrad (21) aufweist, das mit dem besagten Ausgangsrad (13) zusammenwirkt, wobei die Achse des besagten Planetenrades (21) parallel zur Achse des besagten Ausgangsrades (13) ist und schwenkbar um diese angebracht ist, damit sie mindestens zwei Stellungen einnehmen kann:
- eine erste Stellung, bei der das besagte Planetenrad mit einem ersten der besagten Eingangsräder (11) zusammenwirkt, und,
- mindestens eine zweite Stellung, bei der das besagte Planetenrad (21) nicht mit dem besagten ersten Eingangsrad (11) zusammenwirkt.

2. Getriebe nach Anspruch 1, **dadurch gekennzeichnet, dass** mindestens eine der besagten zweiten Stellungen eine Stellung ist, bei der das besagte Planetenrad mit einem zweiten Eingangsrad (12) zusammenwirkt.

3. Getriebe nach einem der Ansprüche 1 oder 2, **dadurch gekennzeichnet, dass** eines der besagten Eingangsräder (11, 12) einem Rückwärtsgang entspricht.

4. Getriebe nach einem der Ansprüche 1 bis 3, **dadurch gekennzeichnet, dass** es ein Gehäuse (1) aufweist, welches die besagten Eingangsräder (11, 12), das besagte Ausgangsrad (13) und das besagte Planetenrad (21) enthält.

5. Getriebe nach Anspruch 4, **dadurch gekennzeichnet, dass** das besagte Gehäuse (1) das Chassis des besagten motorisierten landwirtschaftlichen Arbeitsgeräts bildet.

6. Getriebe nach einem der Ansprüche 4 oder 5, **dadurch gekennzeichnet, dass** mindestens einige der nachfolgenden Elemente mit dem besagten Gehäuse (1) verbunden sind:
- ein Motor;
- ein Lenker;
- eine Gabelstange;
- Werkzeuge zum Bearbeiten des Bodens;
- Räder;
- Schutzeinrichtungen.

7. Motorisiertes landwirtschaftliches Arbeitsgerät, das ein Getriebe wie in einem der Ansprüche 1 bis 6 beschrieben umfasst.

8. Motorisiertes landwirtschaftliches Arbeitsgerät nach Anspruch 7, **dadurch gekennzeichnet, dass** es ein Gehäuse (1) aufweist, welches die besagten Eingangsräder (11, 12), das besagte Ausgangsrad (13) und das besagte Planetenrad (21) enthält.

9. Motorisiertes landwirtschaftliches Arbeitsgerät nach Anspruch 8, **dadurch gekennzeichnet, dass** mindestens einige der nachfolgenden Elemente mit dem besagten Gehäuse verbunden sind:
- ein Motor;
- ein Lenker;
- eine Gabelstange;
- Werkzeuge zum Bearbeiten des Bodens;
- Räder;
- Schutzeinrichtungen.

10. Motorisiertes landwirtschaftliches Arbeitsgerät nach einem der Ansprüche 7 bis 9, **dadurch gekennzeichnet, dass** es einer der folgenden Gruppe angehört:
- motorisierte landwirtschaftliche Arbeitsgeräte;
- Gestrüppharken mit Rädern;
- motorisierte Wickelmaschinen;
- kleinste motorisierte Wickelmaschinen;
- Rasenmäher;
- Mäher mit Häckselfunktion.
